# EUROPÄISCHE PATENTSCHRIFT

(11) **EP 3 458 724 B1**
(45) Veröffentlichungstag und Bekanntmachung des Hinweises auf die Patenterteilung: **22.01.2020**
(21) Anmeldenummer: 17740395.3
(22) Anmeldetag: 18.07.2017
(51) Int. Cl.: F04F 13/00, B01D 53/26, E03B 3/28

(54) **ANORDNUNG UND VERFAHREN ZUR GEWINNUNG VON WASSER AUS EINEM FEUCHTEN GASGEMISCH**
ARRANGEMENT AND METHOD FOR OBTAINING WATER FROM A HUMID GAS MIXTURE
SYSTÈME ET PROCÉDÉ POUR RÉCUPÉRER DE L'EAU À PARTIR D'UN MÉLANGE GAZEUX HUMIDE

(30) Priorität: 25.07.2016 DE 102016213570
(43) Veröffentlichungstag der Anmeldung: 27.03.2019
(73) Patentinhaber: Siemens Aktiengesellschaft, 80333 München (DE)
(72) Erfinder: UNGERER, Markus, 91083 Baiersdorf (DE); ZIMMERMANN, Gerhard, 91315 Höchstadt/Aisch (DE)
(86) Internationale Anmeldenummer: PCT/EP2017/068132
(87) Internationale Veröffentlichungsnummer: WO 2018/019660

(56) Entgegenhaltungen:
- EP-A1- 0 378 844
- FR-A3- 2 541 370
- GB-A- 2 075 602
- US-A1- 2006 037 895
- US-A1- 2010 326 101
- US-A1- 2013 280 038

## Beschreibung

Die Erfindung betrifft eine Anordnung und ein Verfahren zur Gewinnung von Wasser aus einem feuchten Gasgemisch.

In einigen Regionen der Welt ist bereits heute zu wenig Trinkwasser vorhanden. Dieses Problem wird in den kommenden Jahren deutlich wachsen. Gründe dafür stellen einerseits der Klimawandel andererseits das Bevölkerungs- und Wirtschaftswachstums dar. Bis zum Jahr 2020 wird der Wasserbedarf voraussichtlichen um 40% steigen.

Eine Möglichkeit in Küstennähe Trink- und Brauchwasser zu erzeugen, liegt in der Entsalzung von Meerwasser. Meist wird das Trink- und Brauchwasser aus dem Meerwasser mittels Umkehrosmose erzeugt. Allerdings erzeugt diese Technologie große Mengen salzreichen Konzentrats als Abfall. Das Entsorgen dieses salzreichen Konzentrats erfolgt häufig durch Einleiten ins Meer, wo es große Umweltschäden verursacht.

Eine mögliche Alternative zur Wassergewinnung, insbesondere zur Trinkwassergewinnung, liegt in der Gewinnung von Wasser aus der Luft.

Bei der Gewinnung von Wasser aus Luft ist insbesondere die Kühlung einer Oberfläche bis unterhalb des Taupunkts der Luft mit einer elektrisch betriebenen Kältemaschine bekannt. Unterhalb des Taupunkts kondensiert das Wasser aus der Luft und kann so gewonnen werden. Nachteilig weist diese Technik einen hohen Energieverbrauch auf. Auch mit einer Kälterückgewinnungsvorrichtung oder einer Vorkühlung des eintretenden Luftstroms ist der Energieverbrauch dieser Wassergewinnungsmethode nachteilig hoch.

Eine Anordnung mit den Merkmalen des Oberbegriffs von Anspruch 1 ist aus GB 2 075 602 A bekannt. US 2013/280038 A1 offenbart eine Anordnung zur Gewinnung von Wasser aus Meerwasser umfassend einen Druckaustauscher.

Aufgabe der vorliegenden Erfindung ist es daher, ein Verfahren und eine Anordnung anzugeben, welche die Gewinnung von Wasser aus Luft energieeffizient ermöglicht.

Die Aufgabe wird mit einer Anordnung gemäß Anspruch 1 und einem Verfahren gemäß Anspruch 5 gelöst.

Die erfindungsgemäße Anordnung zur Gewinnung von Wasser aus einem feuchten Gasgemisch bei einer ersten Temperatur umfasst eine Kompressorvorrichtung, die geeignet ist zum Komprimieren des Gasgemisches von einem ersten Druck auf einen zweiten Druck, bei dem der Taupunkt des Gasgemischs oberhalb der ersten Temperatur liegt. Weiterhin umfasst die Anordnung einen Druckkessel zum Aufnehmen des Gasgemischs bei dem zweiten Druck und zum Auskondensieren wenigstens eines ersten Anteils des Wassers aus dem Gasgemisch in dem Druckkessel. Weiterhin umfasst die Anordnung einen Druckaustauscher, der geeignet ist zum Übertragen des zweiten Drucks von dem Gasgemisch mit verringertem Wassergehalt auf einen frischen Feed des Gasgemischs. Der Druckaustauscher und der Druckkessel sind derart miteinander über Leitungen verbunden, dass das frische Feed bei dem zweiten Druck vom Druckaustauscher in den Druckkessel und das Gasgemisch mit dem verringerten Wassergehalt vom Druckkessel in den Druckaustauscher führbar ist.

Das erfindungsgemäße Verfahren zur Gewinnung von Wasser aus einem feuchten Gasgemisch bei einer ersten Temperatur umfasst zum einem das Komprimieren des Gasgemischs von einem ersten Druck auf einen zweiten Druck, bei dem der Taupunkt des Gasgemischs oberhalb der ersten Temperatur liegt. Das Gasgemisch wird dann in einen Druckkessel geführt. In dem Druckkessel wird wenigstens ein erster Anteil des Wassers aus dem Gasgemisch auskondensiert, so dass wenigstens ein erster Anteil von Wasser aus dem Gasgemisch gewonnen wird. Weiterhin wird das Gasgemisch mit dem verringerten Wassergehalt bei dem zweiten Druck in einen Druckaustauscher geführt. In dem Druckaustauscher wird der zweite Druck von dem Gasgemisch mit verringertem Wassergehalt auf einen frischen Feed des Gasgemischs in dem Druckaustauscher übertragen. Das frische Feed des Gasgemischs bei dem zweiten Druck wird dann in den Drucckessel geführt.

Bisher wurde eine Energierückgewinnung nach dem Entfeuchten des Gasgemischs durchgeführt, indem das entfeuchtete Gasgemisch durch die Verwendung einer Turbine entspannt wurde und mit einem Generator elektrische Energie erzeugt wurde. Zur Wassergewinnung musste dann wiederum dieselbe Menge an frischem feuchtem Gasgemisch mit dem Kompressor komprimiert werden.

Mit dem Einsatz eines Druckaustauschers wird vorteilhaft das Verfahren zum Komprimieren des Gasgemischs energetisch optimiert. Das entfeuchtete Gasgemisch gibt den Druck an den frischen Feed des Gasgemischs ab, so dass der frische Feed bei einem höheren Druck, insbesondere dem zweiten Druck, zurück in den Druckkessel geführt werden kann. Der Druckaustauscher arbeitet mit einer Effizienz in einem Bereich von 96 - 98% und ist somit vorteilhaft deutlich effizienter im Vergleich zum Einsatz einer Turbine oder eines Generators zur Rückgewinnung der Druckenergie (Wirkungsgrade von ca. 80%). Vorteilhaft wird lediglich eine kleine Menge von frischem Gasgemisch, welche das abgetrennte Wasser ersetzt und die geringen energetischen Verluste im Druckaustauscher ausgleicht, mittels der Kompressorvorrichtung komprimiert.

Weiterhin wird vorteilhaft vermieden, dass die Temperatur des Gasgemischs unter Umgebungstemperatur mittels Kältemaschinen abgekühlt werden muss, um den Taupunkt zu unterschreiten. Kältemaschinen haben nachteilig häufig aufgrund von sich bildenden Eisschichten auf dem Kondensator einen geringeren Wirkungsgrad, da Isolationseffekte den weiteren Kondensationsprozess nachteilig verringern.

In einer vorteilhaften Ausgestaltung und Weiterbildung der Erfindung umfasst der Druckkessel einen Wärmeaustauscher mit einer ersten Fläche, wobei die erste Fläche geeignet ist, die Kondensationswärme in die Umgebung zu transportieren. Besonders vorteilhaft wird die Kondensationswärme in die Umgebung mittels Umgebungsluft abtransportiert. Dann muss der Wärmeaustauscher im Druckkessel eine ausreichend große Fläche aufweisen, um einen effizienten Wärmeaustausch mit dem Kühlmedium Luft zu ermöglichen. Vorteilhaft kann bei einer Kühlung mit Umgebungsluft bei dem erhöhten zweiten Druck im Druckkessel, im Vergleich zu einer Kühlung mit einer Kältemaschine bei Umgebungsdruck, eine bessere Kontrolle der Temperaturverteilung in dem Druckkessel gewährleistet werden.

In einer weiteren vorteilhaften Ausgestaltung und Weiterbildung der Erfindung ist der Druckausstauscher ein Zellenringdruckausstauscher oder Rotationsdruckausstauscher. Vorteilhaft liegen die Effizienzen dieser Druckausstauscher in einem Bereich von 96 - 98%.

Druckaustauscher in dieser Schrift bezeichnen eine Vorrichtung, die geeignet ist eine nahezu isobare Energieübertragung bei druckbetriebenen Prozessen durchzuführen. Insbesondere ist es möglich, mit Druckaustauschern die nach dem Durchlaufen eines Prozesses verbliebene Druckenergie eines Flüssigkeits- oder Gasstroms auf den Feedstrom zu übertragen und so zurückzugewinnen. Bei Druckaustauschern, wie sie hier verwendet werden, wird die Energieübertragung unter Erhaltung des hydraulischen Drucks durchgeführt. Technisch geschieht dies durch räumliche Verdrängung in Druckrohren. Das unter dem zweiten hohen Druck stehende Gasgemisch mit dem verringerten Wassergehalt überträgt den Druck auf das frische Feed-Gasgemisch in einem Druckrohr. Eine verschiebliche Barriere, insbesondere eine Sperrflüssigkeit oder ein Kolben verhindert ein Vermischen der beiden Gasgemische. Durch die Verwendung von hoch- und niedrigseitigen Ventilen werden dann abwechselnd Hochdruckseite und Niedrigdruckseite verbunden.

Mittels mehrerer Druckrohre kann der kontinuierliche Transport und der Druckausgleich beim Umschalten von hohen auf niedrigen Druck optimiert werden. In einem Rotationsaustauscher ist es vorteilhaft möglich, besonders effizient die Energie zu übertragen.

In einem Rotationsdruckaustauscher ist ein zylindrischer Rotor angeordnet, welcher Bohrungen parallel zur Rotorachse umfasst. Das Gasgemisch mit dem verringerten Wassergehalt tritt mit dem hohen zweiten Druck an einem Ende in den Rotationsaustauscher ein und überträgt den Druck unmittelbar auf den frischen Feedgasgemischstrom bei einem niedrigen Druck am anderen Ende des Rotors. Eine verschiebliche Barriere, insbesondere eine Sperrflüssigkeit oder ein Kolben, verhindert ein Vermischen der beiden Gasgemische. Durch die Rotordrehung werden jeweils die Anschlussleitungen auf beiden Seiten wechselseitig geöffnet und verschlossen. In einer Zwischenposition verschließt der Rotationdruckaustauscher beide Enden, und übernimmt so die Funktion von Ventilen.

In einer weiteren vorteilhaften Ausgestaltung der Erfindung liegt die erste Temperatur in einem Bereich von 5°C bis 60°C, insbesondere von 15°C bis 45°C. Vorteilhaft erfolgt das Auskondensieren des Wassers bei Umgebungstemperaturen. Daher sollte der Taupunkt vorteilhaft oberhalb der ersten Temperatur liegen.

In einer weiteren vorteilhaften Ausgestaltung und Weiterbildung der Erfindung liegt der Druck in einem Bereich 1 bar bis 30 bar, insbesondere in einem Bereich von 1 bar bis 10 bar. Typischerweise muss der Druck derart erhöht werden, dass der Taupunkt unterhalb des herrschenden Drucks liegt. Anhand der Taupunktkurve können somit die minimalen Drücke bestimmt werden.

In einer weiteren vorteilhaften Ausgestaltung und Weiterbildung der Erfindung wird die Kompressorvorrichtung über ein Windrad angetrieben oder ist in ein Windrad integriert. Das Komprimieren des Gasgemischs erfolgt dann in einem Windrad mittels Windenergie. Vorteilhaft kann mit einem Windrad die Windenergie direkt verwendet werden, um die Umgebungsluft zu verdichten. Bei der Umwandlung der Rotationsenergie eines Windrads in Strom sind Wirkungsgrade von ungefähr 70% üblich. Zusätzlich treten Verluste bei einem mit Strom angetriebenen Kompressor auf. Diese Verluste können signifikant reduziert werden. Im Zentrum des Windrads wird typischerweise Umgebungsluft angesaugt und mittels der über den gesamten Rotorquerschnitt des Windrads eingefangene Windenergie in einem druckfesten Rohr verdichtet. Das druckfeste Rohr kann sich von dem Zentrum des Windrads in der Mitte der Rotorblätter bis zu dem Boden im Windmast an der Erdoberfläche erstrecken. An der Oberfläche des druckfesten Rohres kann die Wärme, welche bei der Kondensation des Wassers entsteht, abgeführt werden.

Alternativ oder zusätzlich ist die Kompressorvorrichtung ein elektrisch betriebener Kompressor. Vorteilhaft wird mit diesem elektrisch betriebenen Kompressor nur der Anteil komprimiert, welcher aufgrund der Kondensation des Wassers den Druckkessel verlässt und nicht durch den Druckaustauscher geführt wird. Auch können dadurch Druckverluste im Druckaustauscher ausgeglichen werden. Vorteilhaft wird bei der Wassergewinnung dadurch Energie eingespart.

Weitere Ausgestaltungsformen und weitere Merkmale der Erfindung werden an Hand der folgenden Figuren näher erläutert. Dabei handelt es sich um beispielhafte Ausgestaltungsformen und Merkmalskombinationen, die keine Einschränkung des Schutzbereiches bedeuten.

Dabei zeigen:
Figur 1 eine Wassergewinnungsanlage mit einem Druckkessel, einem Kompressor und einem Druckaustauscher;
Figur 2 eine Übersicht der Verfahrensschritte zur Wassergewinnung.

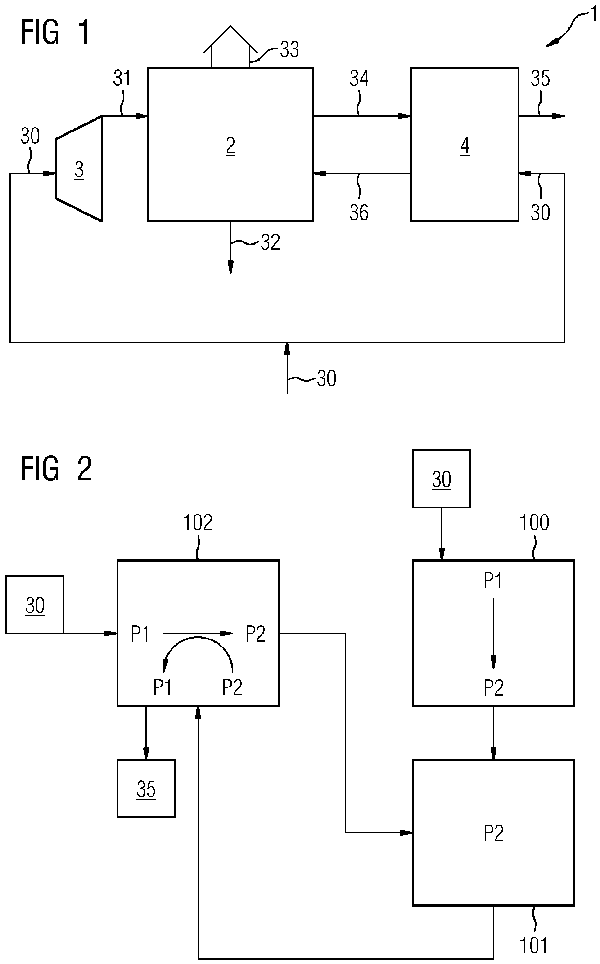

In Figur 1 ist eine Wassergewinnungsanlage 1 mit einem Drucckessel 2, einem elektrischen Kompressor 3 und einem Druckaustauscher 4 gezeigt. Ein feuchtes Feedgasgemisch 30 wird bei einem ersten Druck P1 in den Kompressor 3 geführt. In dem Kompressor 3 wird das feuchte Feedgasgemisch auf einen zweiten Druck P2 komprimiert. Das feuchte Gasgemisch 30 ist insbesondere Luft oder ein feuchtes Abgas. In diesem Beispiel ist das Feedgasgemisch Luft. Die auf einen zweiten Druck P2 komprimierte Luft 30 wird anschließend in einen Druckkessel 2 geführt. In dem Druckkessel 2 kondensiert das Wasser aus der feuchten Luft. Das Wasser 32 kann dann aus dem Druckkessel 2 geführt werden. Die Kondensationswärme 33 kann über eine Wärmeaustauschvorrichtung in die Umgebung abgegeben werden. Besonders bevorzugt wird der Druckkessel 2 mit Umgebungsluft gekühlt. In diesem Fall umfasst der Druckkessel 2 Kühlrippen, um die Oberfläche, die zum Wärmeaustausch zur Verfügung steht, größtmöglich auszugestalten. Das entfeuchtete Gasgemisch, also die entfeuchtete Luft 34 wird bei dem zweiten Druck P2 in den Druckaustauscher 4 geführt. In den Druckaustauscher 4 wird ebenso ein frisches Feedgasgemisch 30 geführt. In dem Druckaustauscher 4 erfolgt dann die Druckübertragung des zweiten Drucks P2 von der entfeuchteten Luft 34 auf das Feedgemisch Luft 30. Den Druckaustauscher 4 verlässt dann das Feedgasgemisch Luft 36 bei einem zweiten Druck P2 in den Druckkessel 2. Das entfeuchtete Gasgemisch Luft 34 verlässt den Druckkessel 2. Lediglich der Anteil des Gasgemischs, welcher als Wasser 32 auskondensiert wurde und die Druckverluste über den Druckaustauscher, muss in dem Kompressor 3 auf den zweiten Druck komprimiert werden.

Die Kompressorvorrichtung kann alternativ zum Kompressor 3 oder zusätzlich zum Kompressor 3 ein Windrad sein.

In einem beispielhaften Verfahren beträgt die Temperatur der Umgebungsluft 27°C mit einer relativen Luftfeuchte von 60%. Der Wassergehalt der Luft beträgt dann 13g_{Wasser}/kg_{Luft}. Mittels des Verfahrens zur Gewinnung von Wasser soll der Wassergehalt der Luft auf einen Gehalt von 7g_{Wasser}/kg_{Luft} getrocknet werden.

Dafür muss der Druck von 1 bar auf 4 bar angehoben werden. Bei einem Kompressorwirkungsgrad von 80% ist für den Wasseranteil in der Luft eine Arbeit von 0,05 kWh pro Liter produziertes Trinkwasser aufzubringen. Für die Verluste des Druckaustauschers kann mit einer Effizienz von 96% gerechnet werden, so dass 0,22 kWh pro Liter produziertes Trinkwasser, aufzubringen sind. Es ergibt sich somit eine Gesamtenergie von 0,27 kWh pro Liter produziertes Trinkwasser bei diesem Beispiel. Bei geringfügig besseren klimatischen Bedingungen, d. h. feuchterer Luft bei höherer Temperatur sind auch Werte von unter 0,2 kWh pro Liter produziertem Trinkwassers möglich. Dies verdeutlicht, dass das Verfahren ebenso energieeffizient ist wie bereits im Stand der Technik verwendete Verfahren zur Wassergewinnung aus Luft.

Figur 2 zeigt das Verfahren zur Wassergewinnung aus Luft. Das Feedgasgemisch Luft wird bei einem ersten Druck P1 in den Kompressor 3 zum Komprimieren auf einen zweiten Druck P2 gegeben. Dieser Schritt erfolgt als Schritt 100. In einem nächsten Schritt 101 kondensiert das Wasser 32 aus dem Gasgemisch bei dem zweiten Druck in dem Druckkessel 2. Anschließend wird das entfeuchtete Gasgemisch 34 in einen Druckaustauscher 4 geführt. In dem Druckaustauscher 4 findet der Druckaustausch 102 statt. Hier wird der zweite Druck P2 von dem entfeuchteten Gasgemisch Luft 34 auf ein frisches Feedgasgemisch 30 übertragen. Dabei verringert sich der Druck des entfeuchteten Gasgemischs von dem zweiten Druck P2 auf den ersten Druck P1, wohingegen das frische Feed-Gasgemisch 30 von einem ersten Druck P1 auf einen zweiten Druck P2 erhöht wird und in den Auskondensierschritt 101 geführt werden kann. Das entfeuchtete Gasgemisch 35 wird nach dem Druckaustausch 102 aus dem Prozess herausgeführt.

## Patentansprüche

1. Anordnung (1) zur Gewinnung von Wasser (32) aus einem feuchten Gasgemisch (30) bei einer ersten Temperatur umfassend:
- eine Kompressorvorrichtung (3) geeignet zum Komprimieren des Gasgemisches (30) von einem ersten Druck (P1) auf einen zweiten Druck (P2), bei dem der Taupunkt des Gasgemischs oberhalb der ersten Temperatur liegt,
- einen Druckkessel (2) zum Aufnehmen des Gasgemischs (31) und Auskondensieren wenigstens eines ersten Anteils des Wassers aus dem Gasgemisch (31) in dem Druckkessel (2),
- **dadurch gekennzeichnet, dass** die Anordnung einen Druckaustauscher (4) geeignet zum Übertragen des zweiten Drucks (P2) von dem Gasgemisch mit verringertem Wassergehalt (35) auf einen frischen Feed (36) des Gasgemischs umfasst,
- wobei der Druckaustauscher (4) und der Druckkessel (2) derart miteinander über Leitungen verbunden sind, dass das frische Feed (36) bei dem zweiten Druck (P2) vom Druckaustauscher(4) in den Druckkessel (2) und das Gasgemisch mit dem verringerten Wassergehalt (34) vom Druckkessel (2) in den Druckaustauscher (4) führbar ist.

2. Anordnung (1) nach Anspruch 1, wobei der Druckkessel (2) einen Wärmeaustauscher mit einer ersten Fläche umfasst, welche geeignet ist, die Kondensationswärme (33) aus dem Drucckessel (2) heraus in die Umgebung zu transportieren.

3. Anordnung (1) nach einem der vorhergehenden Ansprüche, wobei der Druckaustauscher (4) ein Zellenringdruckaustauscher oder ein Rotationsdruckaustauscher ist.

4. Anordnung (1) nach einem der vorhergehenden Ansprüche, wobei die Kompressorvorrichtung ein Windrad und/oder ein elektrisch betriebener Kompressor (3) ist.

5. Verfahren zur Gewinnung von Wasser (32) aus einem Gasgemisch bei einer ersten Temperatur (30) umfassend:
- Komprimieren eines Gasgemisches (30) von einem ersten Druck (P1) auf einen zweiten Druck (P2), bei dem der Taupunkt des Gasgemischs (31) oberhalb der ersten Temperatur liegt,
- Führen des Gasgemischs (31) in einen Druckkessel (2),
- Auskondensieren wenigstens eines ersten Anteils des Wassers (32) aus dem Gasgemisch (31) in dem Druckkessel (2),
- Führen des Gasgemischs mit verringertem Wassergehalt (34) bei dem zweiten Druck (P2) in einen Druckaustauscher (4),
- Übertragen des zweiten Drucks (P2) von dem Gasgemisch mit verringertem Wassergehalt (34) auf einen frischen Feed des Gasgemischs (30) in dem Druckaustauscher (4),
- Führen des frischen Feeds des Gasgemischs (36) bei dem zweiten Druck (P2) in den Druckkessel (2).

6. Verfahren nach Anspruch 5, wobei die erste Temperatur in einem Bereich von 5°C bis 60°C liegt.

7. Verfahren nach einem der Ansprüche 5 oder 6, wobei der zweite Druck (P2) in einem Bereich von 1 bar bis 30 bar liegt.

8. Verfahren nach einem der Ansprüche 5 bis 7, wobei das Komprimieren des Gasgemischs in einem Windrad mittels Windenergie oder elektrisch erfolgt.

9. Verfahren nach einem der Ansprüche 5 bis 8, wobei der Druckkessel (2) mit Umgebungsluft gekühlt wird.

## Claims

1. Arrangement (1) for extracting water (32) from a humid gas mixture (30) at a first temperature, comprising:
- a compressor device (3) suitable for compressing the gas mixture (30) from a first pressure (P1) to a second pressure (P2) at which the dew point of the gas mixture lies above the first temperature,
- a pressure vessel (2) for receiving the gas mixture (31) and condensing out at least a first fraction of the water from the gas mixture (31) in the pressure vessel (2),
- **characterized in that** the arrangement comprises a pressure exchanger (4) suitable for transferring the second pressure (P2) from the gas mixture with reduced water content (35) to a fresh feed (36) of the gas mixture,
- wherein the pressure exchanger (4) and the pressure vessel (2) are connected to one another via lines in such a way that the fresh feed (36) at the second pressure (P2) can be guided from the pressure exchanger (4) into the pressure vessel (2), and the gas mixture with the reduced water content (34) can be guided from the pressure vessel (2) into the pressure exchanger (4).

2. Arrangement (1) according to Claim 1, wherein the pressure vessel (2) comprises a heat exchanger with a first surface which is suitable for transporting the condensation heat (33) out of the pressure vessel (2) into the surroundings.

3. Arrangement (1) according to one of the preceding claims, wherein the pressure exchanger (4) is a cell-ring pressure exchanger or a rotary pressure exchanger.

4. Arrangement (1) according to one of the preceding claims, wherein the compressor device is a wind wheel and/or an electrically operated compressor (3).

5. Method for extracting water (32) from a gas mixture at a first temperature (30), comprising:
- compressing a gas mixture (30) from a first pressure (P1) to a second pressure (P2) at which the dew point of the gas mixture (31) lies above the first temperature,
- guiding the gas mixture (31) into a pressure vessel (2),
- condensing out at least a first fraction of the water (32) from the gas mixture (31) in the pressure vessel (2),
- guiding the gas mixture with reduced water content (34) at the second pressure (P2) into a pressure exchanger (4),
- transferring the second pressure (P2) from the gas mixture with reduced water content (34) to a fresh feed of the gas mixture (30) in the pressure exchanger (4),
- guiding the fresh feed of the gas mixture (36) at the second pressure (P2) into the pressure vessel (2).

6. Method according to Claim 5, wherein the first temperature lies in a range from 5°C to 60°C.

7. Method according to either of Claims 5 and 6, wherein the second pressure (P2) lies in a range from 1 bar to 30 bar.

8. Method according to one of Claims 5 to 7, wherein the gas mixture is compressed in a wind wheel by means of wind energy or electrically.

9. Method according to one of Claims 5 to 8, wherein the pressure vessel (2) is cooled with ambient air.

## Revendications

1. Système (1) pour obtenir de l'eau (32) à partir d'un mélange (30) gazeux humide à une première température, comprenant :
- un dispositif (3) de compresseur, propre à comprimer le mélange (30) gazeux d'une première pression (P1) à une deuxième pression (P2), le point de rosée du mélange gazeux étant au-dessus de la première température,
- une cuve (2) résistante à la pression pour recevoir le mélange (31) gazeux et pour séparer par condensation au moins une première partie de l'eau du mélange (31) gazeux dans la cuve (2) résistante à la pression,
- **caractérisé en ce que** le système comprend un échangeur (4) de pression, propre à transmettre la deuxième pression (P2) du mélange gazeux, ayant une teneur (35) en eau diminuée, à une charge (36) fraîche du mélange gazeux,
- dans lequel l'échangeur (4) de pression et la cuve (2) résistante à la pression communiquent entre eux par des conduits, de manière à pouvoir envoyer la charge (36) fraîche à la deuxième pression (P2) de l'échangeur (4) de pression à la cuve (2) résistante à la pression et le mélange gazeux ayant la teneur (34) en eau diminuée de la cuve (2) résistante à la pression à l'échangeur (4) de pression.

2. Système (1) suivant la revendication 1, dans lequel la cuve (2) résistante à la pression comprend un échangeur de chaleur ayant une première surface propre à transporter la chaleur (33) de condensation de la cuve (2) résistante à la pression à l'atmosphère extérieure.

3. Système (1) suivant l'une des revendications précédentes, dans lequel l'échangeur (4) de pression est un échangeur de pression à anneau cellulaire ou un échangeur de pression à rotation.

4. Système (1) suivant l'une des revendications précédentes, dans lequel le dispositif de compresseur est une roue d'éolienne et/ou un compresseur (3) à fonctionnement électrique.

5. Procédé d'obtention d'eau (32) à partir d'un mélange gazeux à une première température (30), dans lequel :
- on comprime un mélange (30) gazeux d'une première pression (P1) à une deuxième pression (P2), le point de rosée du mélange (31) gazeux étant au-dessus de la première température,
- on envoie le mélange (31) gazeux dans une cuve (2) résistante à la pression,
- on sépare par condensation au moins une première partie de l'eau (32) du mélange (31) gazeux dans la cuve (2) résistante à la pression,
- on envoie le mélange gazeux, ayant une teneur (34) en eau diminuée, à la deuxième pression (P2) dans un échangeur (4) de pression,
- on transmet la deuxième pression (P2) du mélange gazeux, ayant une teneur (34) en eau diminuée, à une charge fraîche du mélange (30) gazeux dans l'échangeur (4) de pression,
- on envoie la charge fraîche du mélange (36) gazeux à la deuxième pression (P2) dans la cuve (2) résistante à la pression.

6. Procédé suivant la revendication 5, dans lequel la première température est dans une plage allant de 5°C à 60°C.

7. Procédé suivant l'une des revendications 5 ou 6, dans lequel la deuxième pression (P2) est dans une plage allant de 1 bar à 30 bar.

8. Procédé suivant l'une des revendications 5 à 7, dans lequel la compression du mélange gazeux s'effectue dans une roue d'éolienne au moyen d'énergie éolienne ou électriquement.

9. Procédé suivant l'une des revendications 5 à 8, dans lequel on refroidit la cuve (2) résistante à la pression par de l'air ambiant.
